# NEUE EUROPÄISCHE PATENTSCHRIFT

(11) **EP 0 327 714 B2**
(45) Veröffentlichungstag und Bekanntmachung des Hinweises auf die Entscheidung über den Einspruch: **18.05.1994**
(45) Hinweis auf die Patenterteilung: 23.01.1991
(21) Anmeldenummer: 88121190.8
(22) Anmeldetag: 17.12.1988
(51) Int. Cl.: F16L 23/00, F16J 15/02

(54) **Flanschverbindung mit einer Dichtung**
Flanged joint with a seal
Raccord à brides muni d'un joint

(30) Priorität: 08.01.1988 DE 8800117 U
(43) Veröffentlichungstag der Anmeldung: 16.08.1989
(73) Patentinhaber: APV ROSISTA GMBH, 59425 Unna (DE)
(72) Erfinder: Bräkelmann, Wolfgang, D-4750 Unna-Uelzen (DE)
(74) Vertreter: Henfling, Fritz, Dipl.-Ing.

(56) Entgegenhaltungen:
- DE-B- 1 959 561
- DE-U- 1 940 772
- DE-U- 7 517 350
- FR-A- 2 231 902
- GB-A- 1 317 685
- US-A- 3 727 926
- Werkstattbuch Heft 92, "Dichtungen", Springer-Verlag 1949

## Beschreibung

Die Neuerung bezieht sich auf eine Flanschverbindung mit einer zwischen die Flansche einer Rohrleitung eingefügten Dichtung, die in einen Rücksprung in der Stirnseite des einen der Flansche eingelagert ist und gegen die der andere Flansch mit seiner glatten Stirnseite anliegt.

Bei derartigen Flanschverbindungen werden in allgemeinen im Querschnitt rechteckige DIN-Dichtungen gewählt, die in vielen Fällen ihren Zweck voll auf erfüllen. Werden jedoch höhere Anforderungen gestellt, wie beispielsweise in der Getränkte- und/oder Lebensmittelindustrie, ist es erforderlich, daß diese Dichtungen ihre gewählte Position genauestens einnehmen und dabei zwischen den Flanschstirnseiten praktisch einen spaltlosen Übergang zum Rohrinnenmantel bilden. Andererseits ist es erforderlich, bei Leitungen, die häufig zum Zwecke der Reinigung und dgl. ausgetauscht werden, den Sitz einer solchen Dichtung exakt beizubehalten. Auch soll hierbei ein leichtes Einschieben der ausgewechselten oder gereinigten Rohrleitungsstränge gegeben sein. Dieses ist bei Einsatz von DIN-Dichtungen, die eine entsprechende glatte vorstehende Stirnseite gegenüber dem korrespondierenden Flansch aufweisen, nicht generell möglich, weil derartige Dichtungen während des parallelen Verschiebens der Flanschstirnseiten verklemmt oder aus iher Nute herausgedrückt werden. Damit ist aber bereits von vornherein eine unebene Übergangsstelle zwischen den Flanschen geschaffen, die insbesondere bei Produkten der Getränkte- und Lebensmittelindustrie gefährliche Bakterienherde aufkommen läßt.

Die Neuerung hat sich nun zur Aufgabe gemacht, eine Dichtung zu schaffen, mit welcher die vorgenannten Nachteile vermeiden werden.

Ausgehend von einer Dichtung der eingangs genannten Art wird deshalb eine Flanschverbindung vorgeschlagen, bei der
in der Basisfläche des Rücksprungs in dem einen der Flansche sich ein zweiter beidseitig eingegrenzter umlaufender Rücksprung befindet,
die zwischen die Flansche eingefügte, ein T-Profil aufweisende Dichtung auf der vom sich in den zweiten Rücksprung in der Basisfläche des ersten Rücksprungs des Flansches einfügenden Steg abgewandten Seite mit einem im Abstand von der inneren Stirnseite der Dichtung verlaufenden, über ihre Basis vorspringenden umlaufenden Wulst versehen ist,
wobei die im entspannten Zustand der Dichtung im Abstand von der Innenwandung der Flansche endende Basis der Dichtung im Einbauzustand eine mit der Innenwandung der Flansche fluchtende Stirnseite ausbildet.

Mit dieser neuerungsgemäß ausgestalteten Dichtungsausführung werden die eingangs genannten Nachteile praktisch ausgeschaltet. Die Dichtung ruht in einer ersten Nute, so daß ein Verschieben während der Montage oder Demontage praktisch nicht möglich ist. Gleichzeitig schließt sie im wesentlichen, d.h. nur unter geringer Vorspannung, mit der sie aufnehmenden Flanschstirnseite ab und weist dabei einen zusätzlichen erhabenen umlaufenden Wulst auf, der letztlich die vollflächige stirnseitige Abstützung gewährleistet, sobald sich die Dichtung in Einbaulage befindet. Andererseits ist durch die Anordnung des umlaufenden Wulstes im Abstand zum inneren Durchmesser der Dichtung der Vorteil gegeben, daß bei Einbau von Rohrleitungsstücken eine Verschiebung der Dichtung nicht mehr vorgenommen werden kann, weil die zurückliegenden Anfangsbereiche von dem zweiten Flansch angedrückt und gehalten werden. Bei weiterer paralleler Verschiebung wird dann die Dichtung endgültig in ihre Position gedrückt, wobei gleichzeitig die zwischen den Flanschen verbleibende Lücke vollauf von den Dichtungsteilen abgeschlossen wird.

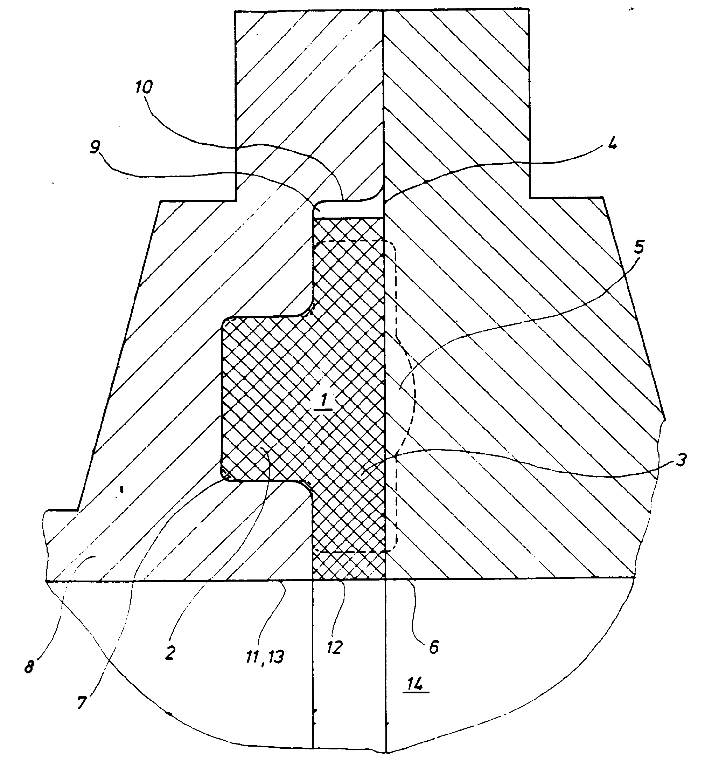

Im nachfolgenden wird due Neuerung anhand eines in der Zeichnung dargestellten Ausführungsbeispiels näher erläutert.

In der Zeichnung ist mit 1 die Dichtung bezeichnet, die T-förmig ausgebildet ist und einen ersten Steg 2 aufweist, dem sich die Basisfläche 3 anschließt. Auf der der korrespondierenden Flanschstirnseite 4 zuweisenden Fläche der Dichtung 1 besitzt diese im nicht angepreßten Zustand einen erhabenen umlaufenden Wulst 5, der im Abstand zum inneren Durchmesser 6 angeordnet ist. Die Dichtung ruht dabei mit ihrem Steg 2 in einer ersten Nute 5 des Flansches 8, wobei die Basisfläche 3 in einer zweiten Nute 9 des gleichen Flansches aufgenommen ist. Die Basisfläche der Dichtung 1 ist dabei kürzer als die zugeordnete Ausnehmung 10 der zweiten Nute 9, so daß diese in Einbaulage, d.h., bei verschraubten Flanschteilen, mit ihrer zur Leitungsseite 11 weisenden Stirnseite 12 it dem Innenmantel 13 der Leitung 14 im wesentlichen bündig abschließt. Durch die gegenüber dem erhaben umlaufenden Wulst 5 tieferliegenden Flächen der Basisfläche 3 ist eine relativ einfache Montague der Flansche auch in paralleler Richtung möglich, weil diese Fläche sich nicht von der korrespondierenden und einzubringenden Flanschstirnseite aus den Nuten herausdrängen läßt, sondern vielmehr darin verbleibt und nach Aufschieben der Flanschstirnseite arretiert wird. Die endgültige Verformung und damit die erforderliche Abdichtung wird durch Anpressen des umlaufenden Wulstes 5 und die dadurch gebenene Materialverlagerung der Dichtung vorgenommen. Hierbei drückt sich ein Teil des Basissteges bzw. der Basisfläche 3 entsprechend zum Zentrum der abzudichtenden Leitung 14.

## Patentansprüche

1. Flanschverbindung mit einer zwischen die Flansche einer Rohrleitung eingefügten Dichtung (1), die in einen Rücksprung (9) in der Stirnseite des einen (8) der Flansche eingelagert ist und gegen die der andere Flansch mit seiner glatten Stirnseite (4) anliegt mit folgenden Merkmalen:
1. in der Basisfläche des Rücksprungs (9) in dem einen (8) der Flansche befindet sich ein zweiter, beidseitig eingegrenzter umlaufender Rücksprung (7),
2. die zwischen die Flansche eingefügte Dichtung (1) weist ein T-Profil auf, ist auf der vom sich in den Rücksprung (7) in der Basisfläche des Rücksprungs (9) des Flansches (8) einfügenden Steg (2) abgewandten Seite mit einem im Abstand von ihrer inneren Stirnseite verlaufenden, über ihre Basis (3) vorspringenden umlaufenden Wulst (5) versehen,
3. die im entspannten Zustand der Dichtung (1) im Abstand von der Innenwandung (13) der Flansche endende Basis (3) der Dichtung (1) bildet im Einbauzustand eine mit der Innenwandung (11) der Flansche fluchtende Stirnseite (12) aus.

## Claims

1. Flange connection, including a seal (1) which is inserted between the flanges of a tube conduit and is embedded in a socket (9) in the end face of one (8) of the flanges, the other flange abutting with its smooth end face (4) against said seal, comprising the following features:
1. a second circumferential socket (7), which is defined at each end, is situated in the base face of the socket (9) in one (8) of the flanges,
2. the seal (1), which is inserted between the flanges, has a T-shaped profile and is provided, on the side remote from the stem (2), which is inserted into the socket (7) in the base face of the socket (9) of the flange (8), with a circumferential bead (5), which extends with spacing from the inner end face of said seal and protrudes beyond the base (3) of said seal,
3. the base (3) of the seal (1), which base terminates at a spacing from the internal wall (13) of the flanges when the seal (1) is in its slack state, provides an end face (12), which is in alignment with the internal wall (11) of the flanges, in the installed position.

## Revendications

1. Liaison par bride comportant un joint d'étanchéité (1) situé entre les brides d'une conduite tubulaire et disposé dans une partie en retrait (9) dans la face frontale de l'une des brides (8), et contre laquelle la face frontale lisse (4) de l'autre bride vient s'appuyer, présentant les caractéristiques suivantes:
- 1 dans la surface de base de la partie en retrait (9) située dans l'une des brides se trouve une seconde partie en retrait (7), périphérique, limitée des deux côtés,
- 2 le joint (1) inséré entre les brides présente un profil en forme de T et est pourvu, sur sa surface opposée à la nervure (2) s'insérant d'elle-même dans la partie en retrait (7) située dans la surface de base de la partie en retrait (9) de la bride (8), d'un bourrelet périphérique (5) faisant saillie au-delà de sa base (3) à distance de sa face frontale interne,
- 3 la base (3) se terminant à distance de la paroi interne (13) des brides lorsque le joint est détendu présente, à l'état monté, une face frontale (12) alignée avec la paroi interne (11) des brides lorsque l'ensemble est monté.
